# EUROPÄISCHE PATENTSCHRIFT

(11) **EP 3 065 978 B1**
(45) Veröffentlichungstag und Bekanntmachung des Hinweises auf die Patenterteilung: **20.06.2018**
(21) Anmeldenummer: 14795955.5
(22) Anmeldetag: 03.11.2014
(51) Int. Cl.: B60R 25/0215, B60R 25/023

(54) **LENKRADSCHLOSS FÜR EINE LENKSÄULE FÜR EIN KRAFTFAHRZEUG**
STEERING COLUMN LOCK FOR A STEERING COLUMN FOR A MOTOR VEHICLE
ANTIVOL DE DIRECTION POUR COLONNE DE DIRECTION POUR VÉHICULE AUTOMOBILE

(30) Priorität: 04.11.2013 DE 102013112124
(43) Veröffentlichungstag der Anmeldung: 14.09.2016
(73) Patentinhaber: ThyssenKrupp Presta AG, 9492 Eschen (LI); thyssenkrupp AG, 45143 Essen (DE)
(72) Erfinder: GEISELBERGER, Thomas, Carmel, IN-46032 (US); GANAHL, Johannes, 6780 Schruns (AT); FLEISCHER, Martin, CH-9436 Balgach (CH); FRICKE, Sascha, 6971 Hard (AT)
(74) Vertreter: thyssenkrupp Intellectual Property GmbH
(86) Internationale Anmeldenummer: PCT/EP2014/002933
(87) Internationale Veröffentlichungsnummer: WO 2015/062740

(56) Entgegenhaltungen:
- EP-A2- 2 025 567
- WO-A1-2012/028324
- JP-A- 2009 248 843

## Beschreibung

Die vorliegende Erfindung betrifft ein Lenkradschloss für eine Lenksäule für ein Kraftfahrzeug, wobei das Lenkradschloss zumindest einen Blockierbolzen, welcher zwischen einer Blockierstellung zum Blockieren der Lenksäule und zumindest einer Freigabestellung zur Freigabe der Lenksäule verstellbar ist, und einen Sicherungsmechanismus, welcher in einem Sperrzustand den Blockierbolzen in der Blockierstellung blockiert und in einem Entsperrzustand eine Bewegung des Blockierbolzens in seine Freigabestellung zulässt, aufweist, wobei der Sicherungsmechanismus zumindest ein mittels eines Vorspannelementes des Sicherungsmechanismus mechanisch vorgespanntes Steuerelement aufweist.

Gattungsgemäße Lenkradschlösser weisen einen Blockierbolzen auf, welcher die Lenksäule blockiert, wenn sich der Blockierbolzen in der Blockierstellung befindet. In diesem Zustand ist es nicht möglich, das Kraftfahrzeug zu lenken. In der Freigabestellung wird die Lenksäule vom Blockierbolzen nicht blockiert, sodass ein Lenken des Kraftfahrzeuges möglich ist. Es ist bekannt, entsprechende Verstellmechanismen vorzusehen, damit der Blockierbolzen beim normalen alltäglichen Betätigen des Lenkradschlosses von seiner Blockierstellung in die Freigabestellung und umgekehrt bewegt werden kann. Im Missbrauchsfall, z.B. wenn das Fahrzeug gestohlen werden soll, wird häufig versucht, das Lenkradschloss aufzubrechen, um den Blockierbolzen aus seiner Blockierstellung heraus zu bewegen, damit das Fahrzeug gelenkt werden kann. Beim Stand der Technik ist es bereits bekannt, Sicherungsmechanismen vorzusehen, welche einen Sperrzustand aufweisen, indem der Blockierbolzen in der Blockierstellung blockiert wird. Im Entsperrzustand des Sicherungsmechanismus lässt dieser eine Bewegung des Blockierbolzens insbesondere in seine Freigabestellung zu. Der Sicherungsmechanismus soll möglichst immer dann automatisch in den Sperrzustand übergehen, wenn versucht wird, das Lenkradschloss auf- oder abzubrechen bzw. anderweitig missbräuchlich zu manipulieren. Ziel des Sicherungsmechanismus bzw. des Sperrzustandes ist es, den Blockierbolzen so in der Blockierstellung zu blockieren, dass mit der Lenksäule trotz Auf- oder Abbrechen oder sonstiger missbräuchlicher Manipulation des Lenkradschlosses nicht gelenkt werden kann.

Ein gattungsgemäßes Lenkradschloss mit einem Sicherungsmechanismus ist z.B. aus der US 2012/0186311 A1 bekannt. Bei diesem Stand der Technik weist der Sicherungsmechanismus einen Sicherungsstift, einen auf einer Schwenkachse gelagerten Schwenkhebel und einen verschiebbar gelagerten Arretierbolzen auf. Im Entsperrzustand dieses beim Stand der Technik bekannten Sicherungsmechanismus hält der kippbar gelagerte Schwenkhebel den Arretierbolzen fest, so lange der Schwenkhebel vom Stift an einer Schwenkbewegung gehindert wird. Um den Sicherungsmechanismus der US 2012/0186311 in seinen Sperrzustand zu bringen, muss der Stift unter dem Schwenkhebel herausgezogen werden.

Die Praxis zeigt, dass Lenkradschlösser auf sehr unterschiedliche Art und Weise missbräuchlich manipuliert oder auf- bzw. abgebrochen werden. Die beim Stand der Technik bekannten Sicherungsmechanismen sind aber nur dazu vorgesehen, eine einzige Art des Missbrauchs bzw. der missbräuchlichen Manipulation abzufangen.

Aus der EP 2 025 567 A2 ist ebenfalls ein gattungsgemäßes Lenkradschloss mit den eingangs genannten Merkmalen bekannt.

Aufgabe der Erfindung ist es, ein gattungsgemäßes Lenkradschloss dahingehend zu verbessern, dass auf eine möglichst einfache Art und Weise möglichst viele verschiedene Missbrauchsfälle abgedeckt sind.

Gelöst wird diese Aufgabe durch ein Lenkradschloss gemäß Patentanspruch 1. In den Unteransprüchen sind vorteilhafte Weiterbildungen der Erfindung beschrieben.

Es ist somit erfindungsgemäß vorgesehen, dass das Steuerelement im Entsperrzustand des Sicherungsmechanismus in einer Normalstellung in einem von Anschlagflächen begrenzten Steuerelementraum des Lenkradschlosses an den Anschlagflächen anliegt und zum Auslösen des Sperrzustandes bei voneinander verschiedenen Arten des Verlagerns oder Entfernens von zumindest einer der Anschlagflächen vom Vorspannelement mit voneinander verschiedenen Freiheitsgraden aus der Normalstellung heraus bewegbar ist.

Es ist somit gemäß der Erfindung vorgesehen, dass der Sicherungsmechanismus ein Steuerelement aufweist, welches so lange in einer Normalstellung in dem von Anschlagflächen begrenzten Steuerelementraum des Lenkradschlosses verharrt, so lange kein Missbrauchsfall auftritt. Das Steuerelement befindet sich somit günstigerweise beim Normalbetrieb des Lenkradschlosses in seiner Normalstellung und sorgt so für den Entsperrzustand des Sicherungsmechanismus. In diesem Entsperrzustand kann der Blockierbolzen von einem an sich bekannten Verstellmechanismus des Lenkradschlosses zwischen seiner Freigabestellung und seiner Blockierstellung frei verstellt werden. So wird der Blockierbolzen in der Regel vom Verstellmechanismus vor Beginn der Fahrt in seine Freigabestellung gebracht und nach dem Abstellen des Fahrzeuges und meist beim Ausschalten der Zündung vom Verstellmechanismus wieder in die Blockierstellung gebracht, in der der Blockierbolzen die Lenksäule blockiert und somit ein Lenken des Fahrzeuges unterbindet. In bevorzugten Ausgestaltungsformen ist das Lenkradschloss gleichzeitig das Zündschloss des Kraftfahrzeugs, durch dessen Betätigung die Zündung des Fahrzeugs ein- und ausgestellt werden kann. Entsprechend kann das Lenkradschloss, wie meist üblich, mittels eines Schlüssels betätigt werden. Es ist aber auch eine anderweitige Betätigung des Lenkradschlosses bzw. Zündschlosses, wie sie beim Stand der Technik auch z.B. durch Knopfdruck bekannt ist, möglich. Der Normalbetrieb beschreibt somit den Zustand, bei dem das Lenkradschloss seiner Bestimmung folgend betätigt wird. Hiervon zu unterscheiden ist der Missbrauchsfall, bei dem versucht wird, das Lenkradschloss auf- oder abzubrechen oder anderweitig missbräuchlich zu manipulieren, um den Blockierbolzen aus seiner Blockierstellung zu bringen.

Um in solchen Missbrauchsfällen den Sicherungsmechanismus in seinen Sperrzustand zu bringen, in dem der Blockierbolzen in der Blockierstellung blockiert wird, sodass er nicht mehr in die Freigabestellung gebracht werden kann, ist gemäß der Erfindung vorgesehen, dass das Steuerelement vom Vorspannelement mit voneinander verschiedenen Freiheitsgraden aus der Normalstellung herausbewegbar ist. Mit Freiheitsgrad wird dabei die Zahl der frei wählbaren, voneinander unabhängigen Bewegungsmöglichkeiten des Steuerelementes bezeichnet. Bevorzugt weist dabei das Steuerelement mindestens zwei voneinander unterschiedliche Freiheitsgrade auf, durch die der Sicherungsmechanismus in den Sperrzustand gebracht werden kann. Denkbar und möglich ist dabei die Ausbildung von drei oder vier Freiheitsgraden der Bewegung des Steuerelements zum Auslösen des Sperrzustandes. Im vorliegenden System ist dabei vorgesehen, dass das Steuerelement erst dann vom Vorspannelement mit einem bestimmten Freiheitsgrad aus der Normalstellung herausbewegt werden kann, wenn eine bestimmte Art des Verlagerns oder Entfernens zumindest einer der Anschlagflächen vorliegt. Das Steuerelement kann also erst dann mit dem entsprechenden Freiheitsgrad aus der Normalstellung herausbewegt werden, wenn zumindest ein Missbrauchsfall vorliegt, indem zumindest eine der Anschlagflächen auf eine bestimmte Art und Weise verlagert oder entfernt worden ist bzw. wird. Eine Besonderheit der Erfindung liegt dabei darin, dass wenn die zumindest eine der Anschlagflächen auf voneinander verschiedene Arten und Weisen verlagert oder entfernt wird, das Vorspannelement das Steuerelement je nach Art und Weise der Verlagerung oder des Entfernens der Anschlagfläche auch in voneinander verschiedenen Freiheitsgraden aus der Normalstellung heraus bewegen kann. Es kann dabei vorgesehen sein, dass eine einzige Anschlagfläche auf verschiedene Arten und Weisen verlagert oder entfernt werden kann, um dadurch eine Bewegung des Steuerelementes mit voneinander verschiedenen Freiheitsgraden aus der Normalstellung heraus zu erreichen. Es kann aber genauso gut auch vorgesehen sein, dass bei einem Verlagern oder Entfernen voneinander verschiedener Anschlagflächen das Vorspannelement das Steuerelement mit voneinander verschiedenen Freiheitsgraden aus der Normalstellung herausbewegt. Unabhängig von den genannten Varianten ist jedenfalls immer vorgesehen, dass der Sperrmechanismus dann in den Sperrzustand übergeht, in dem er den Blockierbolzen in der Blockierstellung blockiert, wenn das Steuerelement vom Vorspannelement aus der Normalstellung herausbewegt wird.

Durch diese erfindungsgemäße Ausbildung des Sicherungsmechanismus ist es möglich, verschiedene Missbrauchsfälle mit einem einzigen Sicherungsmechanismus abzufangen bzw. dafür zu sorgen, dass der Sicherungsmechanismus bei verschiedenen Arten der Missbrauchshandlung in den Sperrzustand übergeht.

Bei den genannten, voneinander verschiedenen Freiheitsgraden handelt es sich um voneinander verschiedene Arten und Weisen der Bewegung des Steuerelementes aus der Normalstellung heraus. Es kann in bevorzugten Ausgestaltungsformen z.B. vorgesehen sein, dass einer der Freiheitsgrade eine Verschiebebewegung des Steuerelementes ist. Einer der Freiheitsgrade kann aber genauso gut auch eine, vorzugsweise achslose, Kipp- oder Schwenkbewegung des Steuerelementes sein. Als voneinander verschiedene Freiheitsgrade sind auch verschiedenartige Verschiebebewegungen, verschiedenartige Kipp- oder Schwenkbewegungen und/oder auch Kombinationen daraus möglich sein.

Bei einer der Anschlagflächen, bei deren Verlagerung oder Entfernung das Vorspannelement das Steuerelement aus der Normalstellung herausbewegt, kann es sich um einen Wandbereich eines Gehäuses oder Gehäuseteils des Lenkradschlosses oder um einen von einem Gehäuse oder Gehäuseteil des Lenkradschlosses abnehmbaren Deckel des Lenkradschlosses handeln. Alternativ oder auch zusätzlich kann z.B. auch vorgesehen sein, dass zumindest eine der genannten Anschlagflächen Teil eines bewegbar gelagerten Abstützelementes des Lenkradschlosses ist, wobei das Abstützelement, wenn ein Schließzylinder aus einem Schließzylinderaufnahmeraum des Lenkradschlosses entfernt wird, in den Schließzylinderaufnahmeraum hineinbewegbar ist. Dieses Abstützelement ist günstigerweise in Richtung der Bewegung hinein in den Schließzylinderaufnahmeraum vorgespannt. Für diese Vorspannung kommen verschiedene Vorspannmittel wie z.B. Blatt- oder Schraubenfedern, Elastomerkörper und dergleichen in Frage. Das Gleiche gilt für das Vorspannelement, welches auf das Steuerelement einwirkt und alle nachfolgend noch genannten Vorspannmittel.

Neben dem eingangs genannten Lenkradschloss betrifft ein weiterer Aspekt der Erfindung ein Lenkradschloss für eine Lenksäule für ein Kraftfahrzeug, wobei das Lenkradschloss zumindest einen Blockierbolzen, welcher zwischen einer Blockierstellung zum Blockieren der Lenksäule und zumindest einer Freigabestellung zur Freigabe der Lenksäule verstellbar ist, und einen Sicherungsmechanismus, welcher in einem Sperrzustand den Blockierbolzen in der Blockierstellung blockiert und in einem Entsperrzustand eine Bewegung des Blockierbolzens in seine Freigabestellung zulässt, aufweist, wobei der Sicherungsmechanismus einen in Richtung hin zu einer Arretierstellung vorgespannten und verschiebbar gelagerten Arretierschieber zum Blockieren des Blockierbolzens in der Blockierstellung aufweist. Dieser nachfolgend geschilderte Aspekt der Erfindung kann gemeinsam aber auch unabhängig vom oben genannten erfindungsgemäßen Lenkradschloss gesehen werden. Auch hier ist die US 2012/0186311 A1 als gattungsgemäßer Stand der Technik zu nennen. Aufgabe dieses zweiten Aspektes der Erfindung ist es, eine alternative Ausgestaltung des Lenkradschlosses bzw. des Sicherungsmechanismus zur Verfügung zu stellen.

Weiter wird die Aufgabenstellung der Erfindung durch ein Lenkradschloss gemäß Anspruch 5 gelöst. Die Unteransprüche beschreiben vorteilhafte Weiterbildungen der Erfindung. In diesem weiteren Aspekt der Erfindung ist es vorgesehen, dass der Sicherungsmechanismus zusätzlich ein Stützelement aufweist, an dem der Arretierschieber im Entsperrzustand abgestützt ist und welches den Arretierschieber zum Erreichen der Arretierstellung und damit des Sperrzustands freigibt. Bevorzugt ist das Stützelement als vorgespannter verschiebbar gelagerter Stützschieber ausgebildet.

Der Arretierschieber ist günstigerweise direkt am Stützelement oder Stützschieber abgestützt. In seiner Arretierstellung greift der Arretierschieber günstigerweise direkt an dem Blockierbolzen an. Es kann z.B. vorgesehen sein, dass der Arretierschieber über eine Schrägfläche auf den Blockierbolzen einwirkt, wobei die Schrägfläche abgewinkelt zu einer Blockierbolzenbewegungsbahn, entlang der der Blockierbolzen zwischen der Blockierstellung und der Freigabestellung bewegbar geführt ist, und abgewinkelt zu einer Arretierschieberbewegungsbahn, entlang der der Arretierschieber in Richtung hin zur Arretierstellung bewegbar geführt ist, angeordnet ist. Bevorzugt handelt es sich jeweils um spitze Winkel.

Bevorzugte Ausgestaltungsformen sehen vor, dass das Lenkradschloss zumindest zwei miteinander verbundene Gehäuseteile aufweist, wobei das Stützelement als Stützschieber in einem der Gehäuseteile verschiebbar gelagert sein kann. Alternativ kann das Stützelement z. B. auch fix an einem der Gehäuseteile angeordnet bzw. fixiert sein. Der Arretierschieber ist dabei günstigerweise in einem anderen der Gehäuseteile, als das Stützelement angeordnet. Das Stützelement, gegebenenfalls in Form des Stützschiebers, gibt beim Trennen der beiden Gehäuseteile voneinander den Arretierschieber zum Erreichen der Arretierstellung und damit des Sperrzustands frei. Hierdurch kann ein weiterer Missbrauchsfall abgefangen werden, nämlich der, wenn die im Normalbetrieb des Lenkradschlosses miteinander verbundenen Gehäuseteile missbräuchlich voneinander getrennt werden. Die im Normalbetrieb miteinander verbundenen Gehäuseteile können einstückig aber auch mehrteilig, dann eben entsprechend miteinander z.B. durch Verschrauben, Verschweißen oder dergleichen verbunden, ausgeführt sein. Alternativ ist es auch denkbar und möglich, das Lenkradschloss derart auszubilden, dass anstelle von zumindest zwei separaten Gehäuseteilen, die miteinander verbunden sind, nur ein einstückiges Gehäuse mit zwei Gehäuseteilen ausgebildet ist. Die Gehäuseteile können dann z. B. an einer Sollbruchstelle im Missbrauchsfall voneinander getrennt werden. In diesem Fall ist die gleiche Wirkung erzielt.

In bevorzugten Ausgestaltungsformen der Erfindung ist jedenfalls vorgesehen, dass der Stützschieber im Entsperrzustand des Sicherungsmechanismus am Steuerelement abgestützt ist und vom Steuerelement zum Auslösen des Sperrzustandes freigegeben wird.

Für die Bewegungsbahnen, auf denen sich der Blockierbolzen, der Arretierschieber und der Stützschieber bewegen, gibt es verschiedene Möglichkeiten. Bevorzugte Ausgestaltungsformen sehen jedenfalls vor, dass eine Blockierbolzenbewegungsbahn, entlang der der Blockierbolzen zwischen der Blockierstellung und der Freigabestellung bewegbar geführt ist, abgewinkelt zu einer Arretierschieberbewegungsbahn, entlang der der Arretierschieber in Richtung hin zur Arretierstellung bewegbar geführt ist, angeordnet ist und/oder dass eine Stützschieberbewegungsbahn, entlang der der Stützschieber bewegbar geführt ist, abgewinkelt zu der Arretierschieberbewegungsbahn angeordnet ist.

Abgewinkelt bedeutet allgemein, dass zwei Dinge und hier im Speziellen die Bewegungsbahnen nicht parallel zueinander verlaufen und auch nicht aufeinander liegen. Besonders bevorzugt sind die genannten Bewegungsbahnen orthogonal zueinander ausgerichtet.

In der besonders bevorzugten Ausführungsform stützt sich der vorgespannte verschiebbar gelagerte Stützschieber am Steuerelement ab und wird durch ein Vorspannelement, das als Feder ausgebildet ist, gegen die Außenwand des Gehäuseteils, in dem der Arretierschieber angeordnet ist, gedrückt, wobei eine Vorspannung in Richtung weg vom Arretierschieber auf den Stützschieber in Richtung Steuerelement aufgebracht wird. Durch diese Ausbildung, in der das Steuerelement in mehreren Freiheitsgraden gegenüber dem Arretierschieber bewegbar (=verlagerbar) ist, wird es möglich, dass bei jeder Verlagerung des Steuerelements gegenüber dem Arretierschieber, die groß genug ist, dass der Stützschieber soweit gegenüber dem Arretierschieber verlagert wird, dass er den Arretierschieber zum Erreichen der Arretierstellung freigibt, der Sperrzustand erreicht wird. Auf diese Weise können insbesondere folgende Missbrauchsfälle zu einem Sperrzustand des Lenkradschlosses führen: Herausnehmen des Schließzylinders, Öffnen des Gehäuses, in dem zumindest das Steuerelement untergebracht ist, Auftrennen der Verbindung der miteinander verbundenen Gehäuseteile.

Weitere Merkmale und Einzelheiten bevorzugter Varianten der vorliegenden Erfindung werden anhand von erfindungsgemäß ausgebildeten Ausführungsbeispielen in der Figurenbeschreibung beispielhaft erläutert. Es zeigen:
Fig. 1 bis 13 Darstellungen zu einem ersten Ausführungsbeispiel eines erfindungsgemäßen Lenkradschlosses;
Fig. 14 bis 16 ein alternativ ausgebildetes erfindungsgemäßes Lenkradschloss.

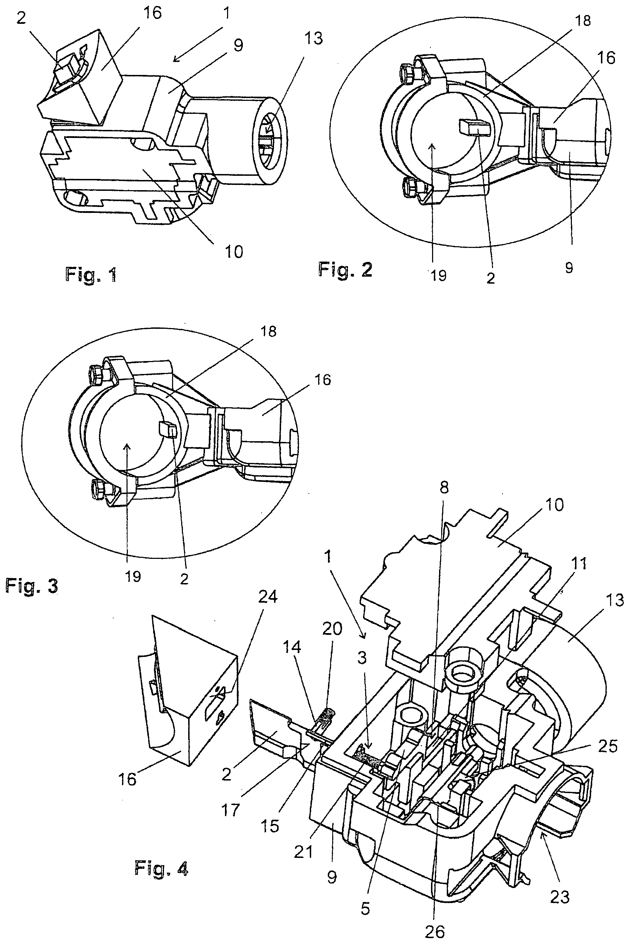

In Fig. 1 ist das erfindungsgemäße Lenkradschloss 1 gemäß des ersten Ausführungsbeispiels in einer perspektivischen Außenansicht dargestellt. Zu sehen sind die im Normalbetrieb miteinander verbundenen Gehäuseteile 9 und 16 sowie der Blockierbolzen 2. Der Innenraum im Gehäuseteil 9 ist über den abnehmbaren Deckel 10 zugänglich. Der Schließzylinderaufnahmeraum 13 dient der Aufnahme eines Schließzylinders 12. Dieser ist in Fig. 1 allerdings nicht im Schließzylinderaufnahmeraum 13 angeordnet. Eine mit dem Gehäuseteil 16 verbundene Schelle 18, die zur Aufnahme der Lenksäule dient, ist in der Fig. 1 nicht dargestellt. Nur die Fig. 2 und 3 zeigen eine Darstellung der Schelle 18, die mit dem zweiten Gehäuseteil 16 verbunden ist. In Fig. 2 ist der Blockierbolzen 2 in seine Blockierstellung ausgefahren. In dieser Blockierstellung greift er in eine hier nicht dargestellte Lenkspindel der Lenksäule ein, um diese so zu blockieren, dass sie nicht mehr um ihre Lenkachse gedreht werden kann und somit eine Lenkung des Kraftfahrzeugs unterbunden ist. Hierdurch blockiert der Blockierbolzen 2 in der Blockierstellung die Lenksäule. Der Eingriff die Lenksäule bzw. deren Lenkspindel kann formschlüssig erfolgen, z.B. wenn in der Lenksäule bzw. Lenkspindel entsprechende Ausnehmungen vorhanden sind, in die der Blockierbolzen 2 eingreifen kann. Es ist aber auch ein reibschlüssiges Feststellen bzw. Blockieren der Lenksäule bzw. deren Lenkspindel möglich. Die Lenkspindel ist jedenfalls das Teil der Lenksäule, an welchem ein Lenkrad befestigt wird. Die Lenksäule ist um ihre Längsachse drehbar gelagert und kann so die Lenkbewegung des Lenkrades übertragen. In den Fig. 2 und 3 ist eine optionale, am Gehäuseteil 16 angebrachte Schelle 18 vorgesehen. Durch die Durchführöffnung 19 der Schelle 18 wird die hier nicht dargestellte Lenkspindel hindurchgeführt.

Fig. 3 zeigt in einer ansonsten zu Fig. 2 analogen Darstellung den Blockierbolzen 2 in seiner zurückgezogenen Freigabestellung, in der die Lenksäule nicht blockiert ist und das Fahrzeug gelenkt werden kann.

Fig. 4 zeigt das Lenkradschloss 1 dieses ersten Ausführungsbeispiels in einer teilweise explodierten Darstellung, in der das Gehäuseteil 16 vom Gehäuseteil 9 getrennt dargestellt und der Deckel 10 vom Gehäuseteil 9 abgehoben ist. Dies erlaubt einen Blick in den Innenraum des Gehäuseteils 9 des Lenkradschlosses 1. In der Fig. 4 sind die Bauteile in einer auseinandergezogenen Darstellung veranschaulicht. Obwohl das Öffnen des Innenraums gerade einen der Missbrauchsfälle darstellt und die Einrichtung entsprechend in den Sperrzustand übergehen würde, sind die Elemente in Fig. 4 im Innenraum des Gehäuseteils 9 bzw. die Elemente des Sicherungsmechanismus 3 in Normalstellung dargestellt. In dem Innenraum des Gehäuseteils 9 befindet sich mit der Übertragungswelle 22 ein wesentliches Teil des Verstellmechanismus. Der Verstellmechanismus dient im Normalbetrieb des Kraftfahrzeuges dazu, den Blockierbolzen 2 in seine Blockierstellung zu verschieben, wenn das Fahrzeug abgestellt wurde und die Zündung ausgestellt wird. Soll das Fahrzeug wieder gestartet werden, so dient der Verstellmechanismus dazu, den Blockierbolzen wieder in seine Freigabestellung zurückzuziehen, sodass die Lenksäule freigegeben ist und das Fahrzeug gelenkt werden kann. Die Übertragungswelle 22 ist hierzu um ihre Längsachse drehbar im Gehäuseteil 9 gelagert und wie an sich bekannt, mit einer entsprechenden Drehachse des in Fig. 4 noch nicht dargestellten Schließzylinders 12 drehfest verbunden. Durch Drehen eines Schlüssels oder dergleichen im Schließzylinder 12 wird auch die Übertragungswelle 22 gedreht. Die Drehbewegung der Übertragungswelle 22 um ihre Längsachse wird über einen entsprechenden Nockenmechanismus 26 in eine Verschiebebewegung des Blockierbolzens 2 zwischen seiner Blockierstellung und seiner Freigabestellung und umgekehrt umgesetzt. Im gezeigten Ausführungsbeispiel dient das Lenkradschloss 1 gleichzeitig als Zündschloss. Hierfür ist in dem Aufnahmeraum 23 ein hier nicht dargestellter, an sich bekannter, elektrischer Schalter vorhanden, über dessen Betätigung die Zündung des Fahrzeugs ein- und ausgestellt werden kann. Darüber hinaus können über diesen elektrischen Schalter auch weitere elektrische Funktionen des Fahrzeugs ein- und ausgeschaltet werden. Die Ansteuerung des im Aufnahmeraum 23 normalerweise vorhandenen elektrischen Schalters erfolgt über den Nocken 25 der Übertragungswelle 22. All dies ist an sich bekannt und muss nicht weiter erläutert werden.

Der geschilderte Verstellmechanismus dient, wie gesagt, dazu, im Normalbetrieb des Fahrzeugs einerseits die Zündung und andererseits den Blockierbolzen 2 zu betätigen. Als zusätzliche Maßnahme ist beim Lenkradschloss 1 der hier gezeigten Ausführungsbeispiele ein Sicherungsmechanismus 3 vorhanden, welcher dazu dient, in Missbrauchsfällen, in denen das Lenkradschloss 1 missbräuchlich manipuliert oder ab- oder aufgebrochen wird, den Blockierbolzen 2 in seiner Blockierstellung zu blockieren. Im Normalbetrieb befindet sich der Sicherungsmechanismus in seinem Entsperrzustand, indem er eine Bewegung des Blockierbolzens in seine Freigabestellung mittels des geschilderten Verstellmechanismus zulässt.

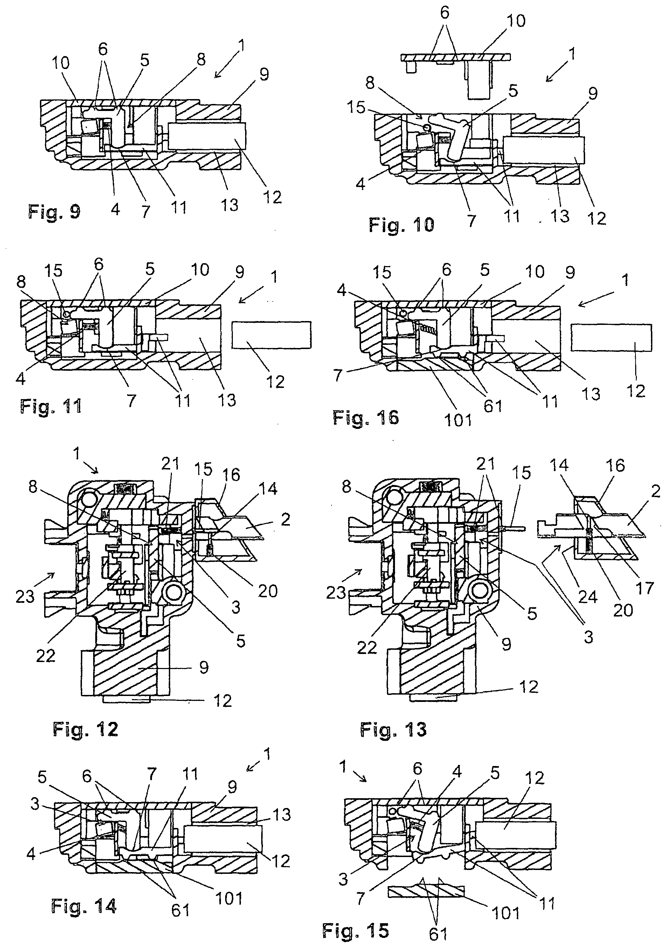

In den beiden gezeigten Ausführungsbeispielen umfasst der Sicherungsmechanismus 3 das im Steuerelementraum 8 angeordnete Steuerelement 5, dessen Vorspannelement 4 sowie den Arretierschieber 14 und den Stützschieber 15 und deren Vorspannmittel 20 und 21. Im Normalbetrieb befindet sich der Sicherungsmechanismus in seinem Entsperrzustand. Dieser Entsperrzustand ist auch in dem Schnitt gemäß Fig. 9 durch das Gehäuseteil 9 gezeigt. Hier ist gut zu sehen, wie im Entsperrzustand des Sicherungsmechanismus 3 das Steuerelement 5 sich in seiner Normalstellung befindet. In dieser Normalstellung liegt das mittels des hier als Schraubenfeder ausgebildeten Vorspannelementes 4 beaufschlagte Steuerelement 5 an den Anschlagflächen 6 und 7 an und stützt den Stützschieber 15 ab. Der Stützschieber 15, der in der Ansicht in Fig. 9 vom Steuerelement 5 verdeckt ist, wird mit einer Spiralfeder als Vorspannmittel 21, die an der Außenwand 24 des Gehäuseteils 16 abgestützt ist, in Richtung weg vom Arretierschieber 14 mit Druck auf das Steuerelement 5 vorgespannt. Die Anschlagflächen 6 und 7 begrenzen den Steuerelementraum 8. Durch die Anschlagflächen 6 und 7 wird das Steuerelement 5 im Normalbetrieb, also wenn kein Missbrauchsfall vorliegt, in seiner in Fig. 9 gezeigten Normalstellung gehalten. Wird das Steuerelement 5 im Missbrauchsfall, ausgelöst durch ein Verlagern oder Entfernen von zumindest einer der Anschlagflächen 6 oder 7, vom Vorspannelement 4 aus der Normalstellung herausbewegt, so gibt das Steuerelement 5 den Stützschieber 15 frei, wodurch der Sperrzustand des Sicherungsmechanismus 3 ausgelöst wird. In diesem Sperrzustand blockiert der Sicherungsmechanismus 3 den Blockierbolzen 2 in seiner Blockierstellung.

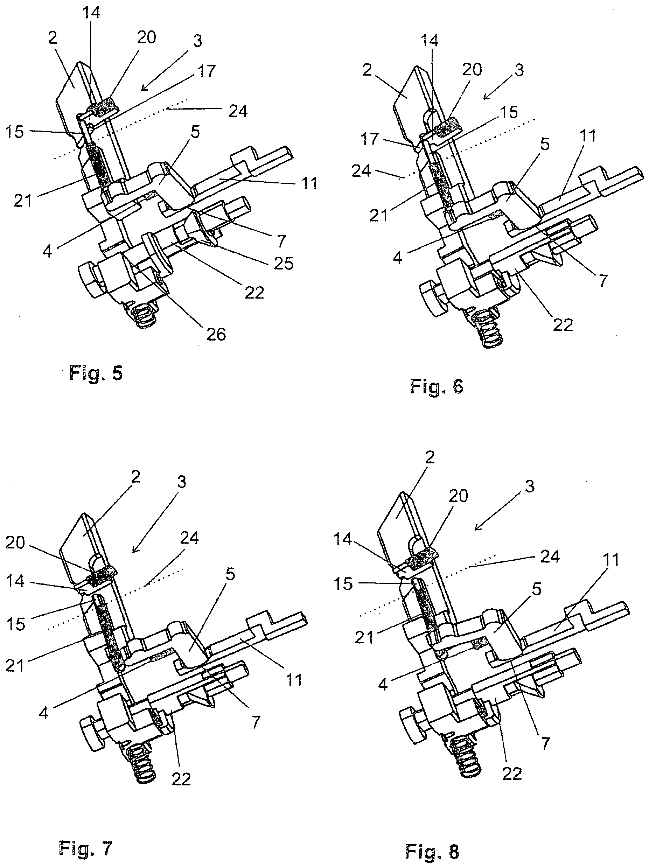

In den Fig. 5 bis 8 ist nun zunächst einmal der Blockierbolzen 2 zusammen mit dem Sicherungsmechanismus 3 und der Übertragungswelle 22 des Verstellmechanismus aber weitgehend ohne die sonstigen Bauteile des Lenkradschlosses 1 dargestellt.
Die Fig. 5 korrespondiert mit der Fig. 9. Die Fig. 7 korrespondiert mit der Fig.11 und die Fig. 8 korrespondiert mit der Fig. 10. Die Fig. 5 und 6 dienen zur Darstellung des Normalbetriebes, in dem der Blockierbolzen 2 vom Verstellmechanismus und damit das Lenkradschloss zwischen seiner Freigabestellung entsprechend Fig. 5 und seiner Blockierstellung entsprechend Fig. 6 wahlweise geschaltet werden kann. Im Beispiel erfolgt die Schalt-Betätigung durch Drehen eines hier nicht dargestellten Schlüssels im hier ebenfalls nicht dargestellten Schließzylinder und der damit verbundenen Drehung eines Nockenmechanismus 26, der an der Übertragungswelle 22 befestigt ist. In den Fig. 5 und 6 befindet sich der Sicherungsmechanismus in seinem Entsperrzustand, in dem er keinen Einfluss auf den Blockierbolzen 2 nimmt und somit eine Bewegung des Blockierbolzens 2 in seine Freigabestellung zulässt. In allen Fig. 5 bis 8 ist die Außenwand 24 des Gehäuseteils 16 als gestrichelte Linie eingezeichnet, da zur besseren Veranschaulichung das Gehäuseteil 16 ausgeblendet ist Fig. 5 zeigt, wie der Blockierbolzen 2 im Normalbetrieb mittels des Verstellmechanismus zurückgezogen ist und sich somit in seiner Freigabestellung befindet, in der das Kraftfahrzeug gelenkt werden kann. Dies entspricht der Stellung gemäß Fig. 3. In Fig. 6 ist die Blockierstellung gemäß Fig. 2 dargestellt, in die der Blockierbolzen 2 durch entsprechendes Drehen der Übertragungswelle 22 ausgefahren wird. Auch hier befindet sich der Sicherungsmechanismus 3 in seinem Entsperrzustand, in dem er keinen Einfluss auf die Bewegbarkeit des Blockierbolzens 2 nimmt.

In den Fig. 7 und 8 sind nun zwei voneinander verschiedene Missbrauchsfälle dargestellt, in denen sich der Sicherungsmechanismus 3 in seinem Sperrzustand befindet. In diesem Sperrzustand blockiert der Sicherungsmechanismus 3 den Blockierbolzen 2 in der Blockierstellung gemäß Fig. 2. Der Blockierbolzen 2 blockiert dann somit die Lenksäule und das Fahrzeug kann nicht mehr gelenkt werden, unabhängig davon, wie und ob der Verstellmechanismus und damit die Übertragungswelle 22 betätigt wird oder nicht.

Im Entsperrzustand des Sicherungsmechanismus 3 gemäß der Fig. 5 und 6 ist der mittels des hier als Schraubenfeder ausgebildeten Vorspannmittels 20 vorgespannte Arretierschieber 14 direkt am Stützschieber 15 abgestützt. Im Sperrzustand gemäß der Fig. 7 und 8 wird das Steuerelement 5 aus seiner Normalstellung entsprechend einem der vorgegebenen Freiheitsgrade wegbewegt, so dass der Stützschieber 15 sich nicht mehr am Steuerelement 5 abstützen kann. Durch das Vorspannmittel 21, das an der Außenwand 24 des Gehäuseteils 16 abgestützt ist, wird der Stützschieber 15 in Richtung weg vom Arretierschieber 14 bewegt. Somit gibt der Stützschieber 15 den Arretierschieber 14 frei, sodass letzterer mittels des Vorspannmittels 20 in Richtung weg vom Vorspannmittel 20 in seine Arretierstellung verschoben wird. Im Sperrzustand gemäß der Fig. 7 und 8 hintergreift der Arretierschieber 14 in seiner Arretierstellung in diesem Ausführungsbeispiel dann einen als Schrägfläche 17 ausgebildeten Hinterschnitt des Blockierbolzens 2, sodass der Blockierbolzen 2 nicht mehr in seine Freigabestellung zurückgeschoben werden kann. Das Zurückziehen des Stützschiebers 15 aus der in Fig. 5 und 6 gezeigten Position im Entsperrzustand in die in den Fig. 7 und 8 gezeigte Position im Sperrzustand des Sicherungsmechanismus 3 erfolgt mittels Vorspannung durch das Vorspannmittel 21. Im Entsperrzustand gemäß der Fig. 5 und 6 ist der Stützschieber 15 am Steuerelement 5 abgestützt, sodass er den Arretierschieber 14 nicht freigeben kann. Wird das Steuerelement 5 in einem Missbrauchsfall aus seiner Normalstellung gemäß der Fig. 5 und 6 vom Vorspannelement 4 herausbewegt, so wird der Stützschieber 15 nicht mehr vom Steuerelement 5 abgestützt und so der Sperrzustand ausgelöst. Wie bereits eingangs erläutert, ist gemäß des ersten Aspektes der Erfindung vorgesehen, dass das Steuerelement 5 im Entsperrzustand des Sicherungsmechanismus 3 in einer Normalstellung in einem von den Anschlagflächen 6, 7 begrenzten Steuerelementraum 8 des Lenkradschlosses 1 an den Anschlagflächen 6, 7 anliegt und zum Auslösen des Sperrzustandes bei voneinander verschiedenen Arten des Verlagerns oder Entfernens von zumindest einer der Anschlagflächen 6, 7 vom Vorspannelement 4 mit voneinander verschiedenen Freiheitsgraden aus der Normalstellung heraus bewegbar ist. In anderen Worten wird das Steuerelement 5 bei verschiedenen Missbrauchsfällen, bei denen zumindest eine Anschlagfläche 6 oder 7 auf verschiedene Arten verlagert oder entfernt wird, mit voneinander verschiedenen Freiheitsgraden aus der Normalstellung herausbewegt.

Die in den Fig. 7 und 8 dargestellten Missbrauchsfälle unterscheiden sich voneinander, da bei ihnen voneinander verschiedene Anschlagflächen 6 und 7 entfernt bzw. verlagert werden und somit gemäß der Erfindung das Steuerelement 5 dann auch mit verschiedenen Freiheitsgraden aus der Normalstellung herausbewegt wird. Fig. 7 zeigt dabei die Situation gemäß Fig. 11, bei der der Schließzylinder 12 aus dem Schließzylinderaufnahmeraum 13 herausgebrochen wurde. Fig. 8 zeigt den Missbrauchsfall gemäß Fig. 10, bei dem der Deckel 10 missbräuchlich vom Gehäuseteil 9 entfernt wurde. Im Missbrauchsfall gemäß der Fig. 8 und 10 wird das Lenkradschloss 1 aufgebrochen, indem der Deckel 10 abgehoben wird. Hierdurch werden die Anschlagflächen 6, welche im Normalbetrieb gemäß Fig. 9 den Steuerelementraum 8 begrenzen, zusammen mit dem Deckel 10 entfernt, wodurch diese Abstützung des Steuerelementes 5 entfällt. Hierdurch kommt es mittels der Beaufschlagung durch das Vorspannelement 4 zu einer achslosen Kipp- bzw. Schwenkbewegung des Steuerelementes 5, wie sie in den Fig. 8 und 10 gut zu sehen ist. Bei diesem Missbrauchsfall besteht der Freiheitsgrad, mit dem das Steuerelement 5 aus der Normalstellung heraus bewegt wird, also in einer achslosen Kipp- und Schwenkbewegung des Steuerelementes 5. Hierdurch wird der Stützschieber 15 vom Steuerelement 5 freigegeben, wodurch das Vorspannmittel 21 den Stützschieber zurückzieht und damit den Arretierschieber 14 freigibt, welcher dann von seinem Vorspannmittel 20 zum Arretieren des Blockierbolzens 2 in die in Fig. 8 dargestellte Arretierstellung ausgefahren wird, womit der Sperrzustand des Sicherungsmechanismus 3 erreicht ist.

Im Missbrauchsfall gemäß der Fig. 7 und 11 wird der Schließzylinder 12 aus dem Schließzylinderaufnahmeraum 13 herausgebrochen. Hierdurch wird das Abstützelement 11 nicht mehr am Schließzylinder 12 abgestützt und das Vorspannelement 4 kann das Steuerelement 7 samt Abstützelement 11 so weit verschieben, dass der Stützschieber 15 wiederum nicht mehr vom Steuerelement 5 abgestützt wird und somit durch Zurückziehen des Stützschiebers 15 und Vorschieben des Arretierschiebers 14 wiederum der Sperrzustand des Sicherungsmechanismus 3 erreicht wird. Bei diesem Missbrauchsfall bei dem der Schließzylinder 12 aus dem Schließzylinderaufnahmeraum 13 herausgebrochen wurde, erfolgt das Auslösen des Sperrzustandes somit durch ein Verschieben der Anschlagfläche 7. Der Freiheitsgrad, mit dem das Steuerelement 5 aus seiner Normalstellung herausbewegt wird, ist ebenfalls eine Verschiebebewegung. Die Missbrauchsfälle der Fig. 7 und 11 einerseits und der Fig. 8 und 10 andererseits unterscheiden sich somit sowohl durch die Art der Bewegung bzw. des Entfernens der jeweiligen Anschlagfläche 6 und 7 wie auch durch den Freiheitsgrad, mit dem das Steuerelement 5 aus seiner Normalstellung gemäß Fig. 9 herausbewegt wird, um den Sperrzustand des Sicherungsmechanismus 3 auszulösen.

Im gezeigten Ausführungsbeispiel sind sowohl der Blockierbolzen 2 als auch der Arretierschieber 14 als auch der Stützschieber 15 ausschließlich linear bewegbar geführt. Die Blockierbolzenbewegungsbahn entlang der der Blockierbolzen 2 zwischen der Blockierstellung und der Freigabestellung bewegbar geführt ist, ist abgewinkelt, im gezeigten Ausführungsbeispiel orthogonal, zu der Arretierschieberbewegungsbahn ausgerichtet, entlang der der Arretierschieber 14 in Richtung hin zur Arretierstellung bewegbar geführt ist. Darüber hinaus ist auch die Stützschieberbewegungsbahn, entlang der der Stützschieber 15 bewegbar geführt ist, abgewinkelt, in diesem Ausführungsbeispiel orthogonal, zur Arretierschieberbewegungsbahn angeordnet.

Wie bereits weiter oben erläutert, wirkt der Arretierschieber 14 über eine Schrägfläche 17 auf den Blockierbolzen 2 ein. Die Schrägfläche 17 ist abgewinkelt zur Blockierbolzenbewegungsbahn und auch abgewinkelt zur Arretierschieberbewegungsbahn angeordnet. Vorzugsweise handelt es sich jeweils um einen spitzen Winkel. Dies hat zur Folge, dass der Blockierbolzen 2 beim Verschieben des Arretierschiebers 14 mittels der Vorspannmittel 20 in seine Arretierstellung in Richtung Blockierstellung geschoben wird, wenn er sich nicht bereits vollständig in der Blockierstellung befindet.

In den Fig. 12 und 13 wird ein dritter Missbrauchsfall anhand des ersten Ausführungsbeispiels des Lenkradschlosses 1 dargestellt. In diesem Missbrauchsfall werden die im Normalbetrieb miteinander verbundenen Gehäuseteile 9 und 16 voneinander getrennt. Wie in den Fig. 12 und 13 gut zu sehen, wird in diesem Missbrauchsfall der Sicherungsmechanismus 3 in seine Sperrstellung gebracht, da der Stützschieber 15 in einem der Gehäuseteile 9 verschiebbar gelagert ist und der Arretierschieber 14 in dem anderen der Gehäuseteile 16 verschiebbar gelagert ist, sodass beim Trennen der beiden Gehäuseteile 9 und 16 voneinander der Stützschieber den Arretierschieber 14 zum Erreichen der Arretierstellung und damit des Sperrzustandes freigibt. Zum Abfangen dieses Missbrauchsfalls könnte in einer vereinfachten Variante anstelle des Stützschiebers 15 auch ein fix bzw. starr am Gehäuseteil 9 angebrachtes Stützelement, z. B. in Form eines entsprechenden Stiftes, vorgesehen sein. Dieses Stützelement würde dann beim Trennen der beiden Gehäuseteile 9 und 16 voneinander den Arretierschieber 14 zum Erreichen seiner Arretierstellung und damit des Sperrzustandes entsprechend freigeben.

Wie in den Fig. 12 und 13 dargestellt, sorgt der in diesem Ausführungsbeispiel realisierte Sicherungsmechanismus 3 also auch dann für ein Blockieren des Blockierbolzens 2 in der Blockierstellung, wenn das gesamte Gehäuseteil 9 des Lenkradschlosses 1 abgebrochen wird.

Die Fig. 14 bis 16 zeigen analoge Darstellungen zu den Fig. 9 bis 11, allerdings für ein zweites Ausführungsbeispiel, welches eine Abwandlungsform des ersten, bereits geschilderten Ausführungsbeispiels ist. Im Nachfolgenden wird im Wesentlichen auf die Unterschiede zum ersten Ausführungsbeispiel eingegangen. Alles andere entspricht soweit anwendbar den Schilderungen zum ersten Ausführungsbeispiel. Dies gilt insbesondere auch für den Missbrauchsfall gemäß der Fig. 12 und 13.

Im Unterschied zum ersten Ausführungsbeispiel sind beim zweiten Ausführungsbeispiel gemäß der Fig. 14 bis 16 die den Steuerelementraum 8 begrenzenden Anschlagflächen 6 nicht mehr Teil eines abnehmbaren Deckels sondern Teil einer fixen Wand des Gehäuseteils 9. Sollte diese fixe Wand des Gehäuseteils 9 mit den Anschlagflächen 6 aufgebrochen werden, so würde der Sicherungsmechanismus 3 entsprechend der Situation gemäß Fig. 10 reagieren und den Sperrzustand einstellen.

Im zweiten Ausführungsbeispiel ist ein Teil der Wandung des Gehäuseteils 9 als abnehmbarer Deckel 101 ausgebildet, auf welchem sich das Abstützelement 11 an Abstützflächen 61 abstützt. Als weiterer Unterschied ist hier vorgesehen, dass an das Vorspannelement 4 etwas schräg angeordnet ist.

Während im ersten Ausführungsbeispiel zum Herausbewegen des Steuerelements 5 aus der Normalstellung voneinander verschiedene Anschlagflächen 6 und 7 zum Auslösen des Sperrzustandes verlagert bzw. entfernt werden, ist es beim zweiten Ausführungsbeispiel gemäß der Fig. 14 bis 16 so, dass bei verschiedenen Missbrauchsfällen zwar dieselbe Anschlagfläche 7 aber diese auf voneinander verschiedene Arten verlagert wird. In dem in Fig. 15 gezeigten Missbrauchsfall, in dem der Deckel 101 missbräuchlich entfernt wird, kommt es aufgrund der Vorspannung durch das Vorspannelement 4 zu einem Kippen des Steuerelements 5 und auch einem Wegkippen des Abstützelementes 11, da die Abstützflächen 61 des Deckels 101 das Abstützelement 11 nicht mehr abstützen. Damit wird auch die den Steuerelementraum 8 begrenzende Anschlagfläche 7 des Abstützelementes 11 verlagert. Durch diese achslose Kipp- bzw. Schwenkbewegung des Steuerelementes 5 kommt wiederum der Stützschieber 15 frei, wodurch wie im ersten Ausführungsbeispiel, der Arretierschieber 14 in seine Arretierstellung bewegt und der Sicherungsmechanismus 3 damit in seinen Sperrzustand gebracht wird, indem der Blockierbolzen 2 in der Blockierstellung blockiert ist.

Der Missbrauchsfall, bei dem im zweiten Ausführungsbeispiel der Schließzylinder 12 aus dem Schließzylinderaufnahmeraum 13 herausgebrochen wird, ist in Fig. 16 dargestellt. Hier kommt es zum Verschieben des Abstützelementes 11 und damit der Anschlagfläche 7 und dabei auch zu einem Verschieben des Steuerelementes 5, sodass wiederum der Stützschieber 15 freikommt und der Sicherungsmechanismus 3 dadurch in entsprechender Art und Weise in den Sperrzustand gebracht wird.

Im Beispiel der Fig. 15 und 16 sind zur Veranschaulichung am Gehäuse 9 zwei abnehmbare Deckel 10, 101 angeordnet. Die Erfindung ist entsprechend jedoch auch anwendbar, wenn nur einer der Deckel 10 oder 101 vorhanden ist.

Abschließend wird noch darauf hingewiesen, dass der erfindungsgemäße Sicherungsmechanismus mit relativ wenig Teilen realisiert werden kann und bei der Anfertigung der Teile relativ große Toleranzen zugelassen werden können, womit der Sicherungsmechanismus relativ einfach und kostengünstig realisierbar ist. Gleichzeitig kann eine sehr große Vielfalt an möglichen Missbrauchsfällen mit dem erfindungsgemäßen Sicherungsmechanismus abgefangen werden.

### Legende

### zu den Hinweisziffern:

- 1: Lenkradschloss
- 2: Blockierbolzen
- 3: Sicherungsmechanismus
- 4: Vorspannelement
- 5: Steuerelement
- 6: Anschlagfläche
- 61: Abstützfläche
- 7: Anschlagfläche
- 8: Steuerelementraum
- 9: Gehäuseteil
- 10: abnehmbarer Deckel
- 101: abnehmbarer Deckel
- 11: Abstützelement
- 12: Schließzylinder
- 13: Schließzylinderaufnahmeraum
- 14: Arretierschieber
- 15: Stützschieber
- 16: Gehäuseteil
- 17: Schrägfläche
- 18: Schelle
- 19: Durchführöffnung
- 20: Vorspannmittel
- 21: Vorspannmittel
- 22: Übertragungswelle
- 23: Aufnahmeraum
- 24: Außenwand
- 25: Nocken
- 26: Nockenmechanismus

## Patentansprüche

1. Lenkradschloss (1) für eine Lenksäule für ein Kraftfahrzeug, wobei das Lenkradschloss (1) zumindest einen Blockierbolzen (2), welcher zwischen einer Blockierstellung zum Blockieren der Lenksäule und zumindest einer Freigabestellung zur Freigabe der Lenksäule verstellbar ist, und einen Sicherungsmechanismus (3), welcher in einem Sperrzustand den Blockierbolzen (2) in der Blockierstellung blockiert und in einem Entsperrzustand eine Bewegung des Blockierbolzens (2) in seine Freigabestellung zulässt, aufweist, wobei der Sicherungsmechanismus (3) zumindest ein mittels eines Vorspannelementes (4) des Sicherungsmechanismus (3) mechanisch vorgespanntes Steuerelement (5) aufweist, **dadurch gekennzeichnet, dass** das Steuerelement (5) im Entsperrzustand des Sicherungsmechanismus (3) in einer Normalstellung in einem von Anschlagflächen (6, 7) begrenzten Steuerelementraum (8) des Lenkradschlosses (1) an den Anschlagflächen (6, 7) anliegt und zum Auslösen des Sperrzustandes bei voneinander verschiedenen Arten des Verlagerns oder Entfernens von zumindest einer der Anschlagflächen (6, 7) vom Vorspannelement (4) mit voneinander verschiedenen Freiheitsgraden aus der Normalstellung heraus bewegbar ist.

2. Lenkradschloss (1) nach Anspruch 1, **dadurch gekennzeichnet, dass** einer der Freiheitsgrade eine Verschiebebewegung des Steuerelementes (5) ist und/oder dass einer der Freiheitsgrade eine achslose Kipp- oder Schwenkbewegung des Steuerelementes (5) ist.

3. Lenkradschloss (1) nach Anspruch 1 oder 2, **dadurch gekennzeichnet, dass** die zumindest eine der Anschlagflächen (6) ein Wandbereich eines Gehäuses oder Gehäuseteils (9) des Lenkradschlosses (1) oder ein von einem Gehäuse oder Gehäuseteil (9) des Lenkradschlosses abnehmbarer Deckel (10) des Lenkradschlosses (1) ist.

4. Lenkradschloss (1) nach einem der Ansprüche 1 bis 3, **dadurch gekennzeichnet, dass** die zumindest eine der Anschlagflächen (7) Teil eines bewegbar gelagerten Abstützelementes (11) des Lenkradschlosses (1) ist, wobei das Abstützelement (11) bei Entfernen eines Schließzylinders (12) aus einem Schließzylinderaufnahmeraum (13) des Lenkradschlosses (1) in den Schließzylinderaufnahmeraum (13) hinein bewegbar ist.

5. Lenkradschloss (1) für eine Lenksäule für ein Kraftfahrzeug, wobei das Lenkradschloss (1) zumindest einen Blockierbolzen (2), welcher zwischen einer Blockierstellung zum Blockieren der Lenksäule und zumindest einer Freigabestellung zur Freigabe der Lenksäule verstellbar ist, und einen Sicherungsmechanismus (3), welcher in einem Sperrzustand den Blockierbolzen (2) in der Blockierstellung blockiert und in einem Entsperrzustand eine Bewegung des Blockierbolzens (2) in seine Freigabestellung zulässt, aufweist, wobei der Sicherungsmechanismus (3) einen in Richtung hin zu einer Arretierstellung vorgespannten und verschiebbar gelagerten Arretierschieber (14) zum Blockieren des Blockierbolzens (2) in der Blockierstellung aufweist, nach einem der Ansprüche 1 bis 4, **dadurch gekennzeichnet, dass** der Sicherungsmechanismus (3) zusätzlich ein Stützelement aufweist, an dem der Arretierschieber (14) im Entsperrzustand, vorzugsweise direkt, abgestützt ist und welches den Arretierschieber (14) zum Erreichen der Arretierstellung und damit des Sperrzustands freigibt.

6. Lenkradschloss (1) nach Anspruch 5, **dadurch gekennzeichnet, dass** das Stützelement ein vorgespannter und verschiebbar gelagerter Stützschieber (15) ist.

7. Lenkradschloss (1) nach Anspruch 5 oder 6, **dadurch gekennzeichnet, dass** das Lenkradschloss (1) zumindest zwei miteinander verbundene Gehäuseteile (9, 16) aufweist, wobei das Stützelement an oder in einem der Gehäuseteile (9) angeordnet ist und der Arretierschieber (14) in einem anderen der Gehäuseteile (16) verschiebbar gelagert ist und das Stützelement beim Trennen der beiden Gehäuseteile (16) voneinander den Arretierschieber (14) zum Erreichen der Arretierstellung und damit des Sperrzustands freigibt.

8. Lenkradschloss (1) nach Anspruch 6 oder 7, **dadurch gekennzeichnet, dass** der Blockierbolzen und/oder der Arretierschieber (14) und/oder das Stützelement in Form des Stützschiebers (15) ausschließlich linear bewegbar geführt ist bzw. sind.

9. Lenkradschloss (1) nach einem der Ansprüche 5 bis 8, **dadurch gekennzeichnet, dass** eine Blockierbolzenbewegungsbahn, entlang der der Blockierbolzen (2) zwischen der Blockierstellung und der Freigabestellung bewegbar geführt ist, abgewinkelt zu einer Arretierschieberbewegungsbahn, entlang der der Arretierschieber (14) in Richtung hin zur Arretierstellung bewegbar geführt ist, angeordnet ist und/oder dass eine Stützschieberbewegungsbahn, entlang der der Stützschieber (15) bewegbar geführt ist, abgewinkelt zu der Arretierschieberbewegungsbahn angeordnet ist.

10. Lenkradschloss (1) nach einem der Ansprüche 5 bis 9, **dadurch gekennzeichnet, dass** der Arretierschieber (14) über eine Schrägfläche (17) auf den Blockierbolzen (2) einwirkt, wobei die Schrägfläche (17) abgewinkelt zu einer Blockierbolzenbewegungsbahn, entlang der der Blockierbolzen (2) zwischen der Blockierstellung und der Freigabestellung bewegbar geführt ist, und abgewinkelt zu einer Arretierschieberbewegungsbahn, entlang der der Arretierschieber (14) in Richtung hin zur Arretierstellung bewegbar geführt ist, angeordnet ist.

11. Lenkradschloss (1) nach einem der Ansprüche 1 bis 4 und einem der Ansprüche 6 bis 10, **dadurch gekennzeichnet, dass** der Stützschieber (15) im Entsperrzustand des Sicherungsmechanismus (3) am Steuerelement (5) abgestützt ist und vom Steuerelement (5) zum Auslösen des Sperrzustandes freigebbar ist.

## Claims

1. Steering wheel lock (1) for a steering column for a motor vehicle, wherein the steering wheel lock (1) comprises at least one blocking pin (2), which is adjustable between a blocking position for blocking the steering column, and at least one release position for releasing the steering column, and a securing mechanism (3) which, in a blocking state, blocks the blocking pin (2) in the blocking position and, in an unblocked state, permits a movement of the blocking pin (2) into its release position, wherein the securing mechanism (3) comprises at least one control element (5) which is mechanically pretensioned by means of a pretensioning element (4) of the securing mechanism (3), **characterized in that**, in the unblocked state of the securing mechanism (3), the control element (5), in a normal position in a control element space (8) of the steering wheel lock (1), which space is delimited by stop surfaces (6, 7), lies against the stop surfaces (6, 7) and, in order to trigger the blocking state, is movable out of the normal position with differing ways of shifting or removing at least one of the stop surfaces (6, 7) by the pretensioning element (4) with differing degrees of freedom.

2. Steering wheel lock (1) according to Claim 1, **characterized in that** one of the degrees of freedom is a displacement movement of the control element (5), and/or **in that** one of the degrees of freedom is an axis-free tilting or pivoting movement of the control element (5).

3. Steering wheel lock (1) according to Claim 1 or 2, **characterized in that** at least one of the stop surfaces (6) is a wall region of a housing or housing part (9) of the steering wheel lock (1) or a cover (10) of the steering wheel lock (1), which cover is removable from a housing or housing part (9) of the steering wheel lock.

4. Steering wheel lock (1) according to one of Claims 1 to 3, **characterized in that** at least one of the stop surfaces (7) is part of a movably mounted supporting element (11) of the steering wheel lock (1), wherein, when a locking cylinder (12) is removed from a locking cylinder receiving space (13) of the steering wheel lock (1), the supporting element (11) is movable into the locking cylinder receiving space (13).

5. Steering wheel lock (1) for a steering column for a motor vehicle, wherein the steering wheel lock (1) comprises at least one blocking pin (2), which is adjustable between a blocking position for blocking the steering column, and at least one release position for releasing the steering column, and a securing mechanism (3) which, in a blocking state, blocks the blocking pin (2) in the blocking position and, in an unblocked state, permits a movement of the blocking pin (2) into its release position, wherein the securing mechanism (3) comprises a locking slide (14), which is pretensioned in the direction of a locking position and is mounted displaceably, for blocking the blocking pin (2) in the blocking position, according to one of Claims 1 to 4, **characterized in that** the securing mechanism (3) additionally has a support element, on which the locking slide (14) is supported, preferably directly, in the unblocked state and which releases the locking slide (14) in order to reach the locking position and therefore the blocking state.

6. Steering wheel lock (1) according to Claim 5, **characterized in that** the support element is a pretensioned and displaceably mounted support slide (15).

7. Steering wheel lock (1) according to Claim 5 or 6, **characterized in that** the steering wheel lock (1) comprises at least two interconnected housing parts (9, 16), wherein the support element is arranged on or in one of the housing parts (9) and the locking slide (14) is mounted displaceably in another of the housing parts (16), and, when the two housing parts (16) are separated from each other, the support element releases the locking slide (14) in order to reach the locking position and therefore the blocking state.

8. Steering wheel lock (1) according to Claim 6 or 7, **characterized in that** the blocking pin and/or the locking slide (14) and/or the support element in the form of the support slide (15) are or is guided exclusively in a linearly movable manner.

9. Steering wheel lock (1) according to one of Claims 5 to 8, **characterized in that** a blocking pin movement path, along which the blocking pin (2) is guided movably between the blocking position and the release position, is arranged at an angle to a locking slide movement path, along which the locking slide (14) is guided movably in the direction of the blocking position, and/or **in that** a support slide movement path, along which the support slide (15) is guided movably, is arranged at an angle to the locking slide movement path.

10. Steering wheel lock (1) according to one of Claims 5 to 9, **characterized in that** the locking slide (14) acts on the blocking pin (2) via an oblique surface (17), wherein the oblique surface (17) is arranged at an angle to a blocking pin movement path, along which the blocking pin (2) is guided movably between the blocking position and the release position, and at an angle to a locking slide movement path, along which the locking slide (14) is guided movably in the direction of the locking position.

11. Steering wheel lock (1) according to one of Claims 1 to 4 and one of Claims 6 to 10, **characterized in that**, in the unblocked state of the securing mechanism (3), the support slide (15) is supported on the control element (5) and can be released by the control element (5) in order to trigger the blocking state.

## Revendications

1. Antivol de direction (1) pour une colonne de direction d'un véhicule automobile, l'antivol de direction (1) présentant au moins un boulon de blocage (2) qui peut être réglé entre une position de blocage pour bloquer la colonne de direction et au moins une position de libération pour libérer la colonne de direction, et un mécanisme de fixation (3) qui, dans un état de verrouillage, bloque le boulon de blocage (2) dans la position de blocage et qui, dans un état de déverrouillage, permet un déplacement du boulon de blocage (2) dans sa position de libération, le mécanisme de fixation (3) présentant au moins un élément de commande (5) précontraint mécaniquement au moyen d'un élément de précontrainte (4) du mécanisme de fixation (3), **caractérisé en ce que** l'élément de commande (5), dans l'état de verrouillage du mécanisme de fixation (3), dans une position normale, s'applique, dans un espace d'élément de commande (8) de l'antivol de direction (1) limité par des surfaces de butée (6, 7), contre les surfaces de butée (6, 7), et, pour déclencher l'état de verrouillage, dans le cas de différents types de déplacement ou d'éloignement d'au moins l'une des surfaces de butée (6, 7) de l'élément de précontrainte (4), peut être déplacé avec dea degrés de liberté différents les uns des autres hors de la position normale.

2. Antivol de direction (1) selon la revendication 1, **caractérisé en ce que** l'un des degrés de liberté est un mouvement de translation de l'élément de commande (5) et/ou **en ce que** l'un des degrés de liberté est un mouvement de basculement ou de pivotement sans axe de l'élément de commande (5).

3. Antivol de direction (1) selon la revendication 1 ou 2, **caractérisé en ce que** l'au moins une des surfaces de butée (6) est une région de paroi d'un boîtier ou d'une partie de boîtier (9) de l'antivol de direction (1) ou un couvercle (10) de l'antivol de direction (1) pouvant être enlevé d'un boîtier ou d'une partie de boîtier (9) de l'antivol de direction.

4. Antivol de direction (1) selon l'une quelconque des revendications 1 à 3, **caractérisé en ce que** l'au moins une des surfaces de butée (7) fait partie d'un élément de support (11) de l'antivol de direction (1) supporté de manière déplaçable, l'élément de support (11) pouvant être déplacé dans l'espace de réception d'un cylindre de fermeture (13) lors de l'enlèvement d'un cylindre de fermeture (12) hors d'un espace de réception de cylindre de fermeture (13) de l'antivol de direction (1).

5. Antivol de direction (1) pour une colonne de direction pour un véhicule, l'antivol de direction (1) présentant au moins un boulon de blocage (2) qui peut être déplacé entre une position de blocage pour bloquer la colonne de direction et au moins une position de libération pour libérer la colonne de direction, et un mécanisme de fixation (3), qui, dans un état de verrouillage, bloque le boulon de blocage (2) dans la position de blocage, et dans un état de déverrouillage, permet un déplacement du boulon de blocage (2) dans sa position de libération, le mécanisme de fixation (3) présentant un coulisseau d'arrêt (14) supporté de manière déplaçable et précontraint dans la direction d'une position d'arrêt, pour bloquer le boulon de blocage (2) dans la position de blocage, selon l'une quelconque des revendications 1 à 4, **caractérisé en ce que** le mécanisme de fixation (3) présente en outre un élément de support au niveau duquel le coulisseau d'arrêt (14), dans l'état de déverrouillage, est supporté de préférence directement, et qui libère le coulisseau d'arrêt (14) pour atteindre la position d'arrêt et par conséquent l'état de verrouillage.

6. Antivol de direction (1) selon la revendication 5, **caractérisé en ce que** l'élément de support est un coulisseau de support (15) supporté de manière déplaçable et précontraint.

7. Antivol de direction (1) selon la revendication 5 ou 6, **caractérisé en ce que** l'antivol de direction (1) présente au moins deux parties de boîtier connectées l'une à l'autre (9, 16), l'élément de support étant disposé sur ou dans l'une des parties de boîtier (9) et le coulisseau d'arrêt (14) étant supporté de manière déplaçable dans une autre des parties de boîtier (16) et l'élément de support, lors de la séparation des deux parties de boîtier (16) l'une de l'autre, libérant le coulisseau d'arrêt (14) pour atteindre la position d'arrêt et par conséquent l'état de verrouillage.

8. Antivol de direction (1) selon la revendication 6 ou 7, **caractérisé en ce que** le boulon de blocage et/ou le coulisseau d'arrêt (14) et/ou l'élément de support sous forme de coulisseau de support (15) sont guidés de manière déplaçable de manière exclusivement linéaire.

9. Antivol de direction (1) selon l'une quelconque des revendications 5 à 8, **caractérisé en ce qu'**une trajectoire de déplacement du boulon de blocage le long de laquelle le boulon de blocage (2) est guidé de manière déplaçable entre la position de blocage et la position de libération est disposée de manière inclinée par rapport à une trajectoire de déplacement du coulisseau d'arrêt le long de laquelle le coulisseau (14) est guidé de manière déplaçable dans la direction de la position d'arrêt, et/ou **en ce qu'**une trajectoire de déplacement du coulisseau de support, le long de laquelle le coulisseau de support (15) est guidé de manière déplaçable, est disposée de manière inclinée par rapport à la trajectoire de déplacement du coulisseau d'arrêt.

10. Antivol de direction (1) selon l'une quelconque des revendications 5 à 9, **caractérisé en ce que** le coulisseau d'arrêt (14) agit par le biais d'une surface oblique (17) sur le boulon de blocage (2), la surface oblique (17) étant disposée de manière inclinée par rapport à une trajectoire de déplacement du boulon de blocage le long de laquelle le boulon de blocage (2) est guidé de manière déplaçable entre la position de blocage et la position de libération, et de manière inclinée par rapport à une trajectoire de déplacement du coulisseau d'arrêt le long de laquelle le coulisseau d'arrêt (14) est guidé de manière déplaçable dans la direction de la position d'arrêt.

11. Antivol des directions (1) selon l'une quelconque des revendications 1 à 4 et selon l'une quelconque des revendications 6 à 10, **caractérisé en ce que** le coulisseau de support (15), dans l'état déverrouillé du mécanisme de fixation (3), est supporté sur l'élément de commande (5) et peut être libéré de l'élément de commande (5) pour déclencher l'état de verrouillage.
